# EUROPÄISCHE PATENTSCHRIFT

(11) **EP 1 244 270 B1**
(45) Veröffentlichungstag und Bekanntmachung des Hinweises auf die Patenterteilung: **31.05.2006**
(21) Anmeldenummer: 02002845.2
(22) Anmeldetag: 08.02.2002
(51) Int. Cl.: H04L 29/06

(54) **Verfahren zur Bereitstellung eines authentischen elektronischen Zertifikats**
Method for generating an authentic electronic certificate
Méthode de creation d'un certificat authentique et électronique

(30) Priorität: 22.03.2001 DE 10114156
(43) Veröffentlichungstag der Anmeldung: 25.09.2002
(73) Patentinhaber: Deutsche Telekom AG, 53113 Bonn (DE)
(72) Erfinder: Milczewsky, Klaus, 64342 Seeheim-Jugenheim (DE); Boos, Elmar, 97906 Faulbach (DE)

(56) Entgegenhaltungen:
- WO-A-01/11452
- WO-A-99/56434

## Beschreibung

Die Erfindung betrifft ein Verfahren zur Bereitstellung eines authentischen elektronischen Zertifikats, bei welchem das Zertifikat von einem Client unter Nutzung einer elektronischen Verbindung bei einem Server angefordert werden kann, der Server das angeforderte Zertifikat automatisch generiert und es an den Client überträgt.

Mit der zunehmenden Verbreitung elektronischer Medien für die Datenübertragung bzw. Datenfernübertragung, insbesondere mit der zunehmenden Nutzung des Internet für derartige Zwecke steigt der Bedarf an Möglichkeiten zur Gewährleistung der Vertraulichkeit und der Authentizität der übertragenen Daten. Vertrauliche Daten werden daher vor der Übertragung mittels kryptographischer Verfahren verschlüsselt. Dabei werden für offene Systeme wie das Internet sogenannte asymmetrische Verschlüsselungsverfahren bevorzugt, bei denen für das Verschlüsseln einer Nachricht (von Daten) ein anderer Schlüssel eingesetzt wird als für das Entschlüsseln. Soweit der für das Verschlüsseln verwendete Schlüssel ein öffentlich bekannter Schlüssel (Public Key) ist, spricht man in diesem Zusammenhang auch von Public-Key-Verfahren. Derjenige, der den öffentlichen Schlüssel bekannt gibt, kann dabei von einer Mehrzahl unterschiedlicher Absender Nachrichten erhalten, welche von allen Absendern mit dem öffentlichen Schlüssel verschlüsselt werden, aber nur durch den Empfänger mit seinem persönlichen und geheimen Schlüssel zu entschlüsseln sind. Auf diese Weise ist die Vertraulichkeit der übertragenen Nachrichten gewährleistet. Im Hinblick darauf, dass der Nutzer eines offenen Systems, in welchem er Daten mit anderen Nutzern austauscht, wechselnd Absender und Empfänger von Nachrichten ist, verfügt jeder Nutzer, der diese Daten vertraulich unter Nutzung des Public-Key-Verfahrens austauschen möchte, über einen eigenen, den anderen Kommunikationspartner bekanntzugebenden öffentlichen Schlüssel und über mehrere öffentliche Schlüssel anderer Nutzer sowie über einen privaten Schlüssel. Aus Performancegründen werden zur Verschlüsselung größerer Nachrichten auch so genannte hybride Verfahren eingesetzt, bei denen die Nachricht selbst mit einem schnellen symmetrischen Verschlüsselungsalgorithmus (z.B. DES - siehe hierzu z.B. Beutelspacher, Schwenk, Wolfenstetter "Moderne Verfahren der Krytographie", 3. Auflage Vieweg Verlag Wiesbaden 1999) verschlüsselt wird, und dann nur der zum Entschlüsseln benötigte symmetrische Schlüssel mit dem öffentlichen Schlüssel des Empfängers bzw. mit den öffentlichen Schlüsseln der Empfänger verschlüsselt und der Nachricht beigefügt wird.

Allerdings identifiziert der öffentliche Schlüssel allein seinen Nutzer, eine Applikation oder einen Host noch nicht, d.h. der Empfänger der verschlüsselten Nachricht hat keine Gewähr über deren Authentizität, er weiß zum Beispiel nicht, ob der vorgebliche Absender auch der tatsächliche ist. Um auch hier Sicherheit zu schaffen, bedient man sich eines weiteren kryptographischen Mechanismus, der so genannten digitalen Signatur. Der Nutzer einer digitalen, auch als elektronische Unterschrift bezeichneten Signatur muss dabei bei denen, die später signierte Nachrichten von ihm erhalten, einmalig Vertrauen in die Authentizität dieser elektronischen Unterschrift schaffen. Entsprechend einer einfachen, einen so genannten out-of-band-Mechanismus nutzenden Variante ist die Vorgehensweise hierzu in etwa die folgende: Der Nutzer der digitalen Signatur signiert einen Datensatz, der seinen öffentlichen Schlüssel, Identifikationsinformationen (z. B. seine E-Mail-Adresse) und einen kurzen Hashwert enthält, mit seinem privaten Schlüssel.

Nach der Übermittlung der Information ruft er den Empfänger an und gibt ihm telefonisch den verwendeten Hashwert durch. Sofern sich Sender und Empfänger kennen, kann dabei der Empfänger den Absender der Nachricht anhand seiner Stimme identifizieren.

Demzufolge kann er auch den Datensatz, sofern dieser nach Entschlüsselung mit dem öffentlichen Schlüssel den ihm zur Kenntnis gegebenen Hashwert enthält, als authentisch erkennen und ihn entsprechend kennzeichnen. Künftig kann er jede auf identische Weise signierte Mitteilung des Empfängers als authentisch einstufen (nähere Einzelheiten hierzu siehe u. a. Beutelspacher, Schwenk, Wolfenstetter "Moderne Verfahren der Krytographie", 3. Auflage Vieweg Verlag Wiesbaden 1999). Problematisch ist es hierbei, dass zur Gewährleistung der Authentizität ein vergleichsweise hoher Aufwand erforderlich ist. Wollten sich beispielsweise die Mitarbeiter einer Firma mit 1.000 Mitarbeitern auf die beschriebene Weise gegenseitig authentisieren, müsste hierzu jeder Mitarbeiter zumindest einmal mit jedem anderen kommunizieren. Es wären demnach 999.000 Telefonate erforderlich.

Eine Verbesserung der Situation ergibt sich bei der Verwendung so genannter Public-Key-Infrastrukturen. Hier wird das Vertrauen, also die Authentizität in einer baumförmigen Struktur über- bzw. vermittelt. Die Nutzer müssen lediglich Vertrauen in eine Zertifizierungseinrichtung und das von ihr bereitgestellte so genannte Root-Zertifikat herstellen. Alle anderen Vertrauensbeziehungen der Nutzer untereinander lassen sich dann aus diesem Root-Zertifikat ableiten. Nähere Einzelheiten hierzu siehe beispielsweise http://www.logosec.de/zertifikate.htm.

Bezogen auf das oben genannte Beispiel der Firma mit 1.000 Mitarbeitern wären hier noch etwa 2.000 Verifikationen nötig. Dazu müsste jeder der 1.000 Mitarbeiter das Root-Zertifikat akzeptieren und an einer zentralen Stelle müssten die mit dem jeweiligen öffentlichen Schlüssel verknüpften Identifikationsdaten der Mitarbeiter überprüft und im Erfolgsfall der Datensatz mit dem privaten Schlüssel, welcher dem Root-Zertifikat zugeordnet ist, signiert werden. Ein solches von der zentralen Stelle signiertes Zertifikat würde auf Grund der Vertrauensbeziehung zwischen den Nutzern und der Zertifizierungsstelle die Authentizität der Mitarbeiter untereinander belegen können. Das Zertifikat ist dabei mit einem elektronischen Personalausweis vergleichbar. Die Erstellung derartiger Zertifikate erfolgt vorzugsweise nach dem X.509-Standard der ISO. Allerdings verursacht die Überprüfung der Identifikationsdaten durch die zentrale Stelle dabei aber immer noch einen beträchtlichen Aufwand. Bei der Verwendung eines out-of-band-Mechanismus müssten die Nutzer beispielsweise zu ihrer Identifizierung ihren Personalausweis oder andere ihre Identität belegende Nachweise vorlegen. Dies ist für den massenhaften Einsatz viel zu aufwendig und letztlich auch zu teuer.

In der WO 01/11452 A wird ein Verfahren beschrieben, nach welchem ein Nutzer des Internet auf der Grundlage einer beim Zugang zum Netz erfolgenden Authentifizierung für die Dauer der dabei begonnen Internetsession auch Zugang zu von ihm über das Internet genutzten, eine Authentifizierung erfordernden Anwendungen mit einem Sicherheitslevel erhält. Dieses wird mittels eines Token gewährleistet, über welches den entsprechenden Anwendungen die Authentizität des Nutzers bestätigt wird. Dieses Token ist jedoch, wie betont, nur für die Dauer der Session gültig und kann daher als solches nicht als ein Zertifikat dienen, mit welchem der Nutzer etwa künftig seine E-Mails signieren oder sich zur Durchführung geschäftlicher Transaktionen über das Internet authentifizieren könnte. Auch ist nicht ersichtlich in welcher Weise gegebenenfalls ein, ein entsprechendes Zertifikat generierender Server auf Daten beziehungsweise Identitätsmerkmale des Nutzers zugreifen könnte, die als Grundlage zur Erstellung des Zertifikats geeignet sind.

Aufgabe der Erfindung ist es daher, ein Verfahren anzugeben, durch welches authentische elektronische Zertifikate schnell und kostengünstig bereitgestellt werden können. Die Aufgabe wird durch ein Verfahren entsprechend dem Hauptanspruch gelöst. Vorteilhafte Ausgestaltungen bzw. Weiterbildungen des erfindungsgemäßen Verfahrens sind durch die Unteransprüche gegeben.

Gemäß der Erfindung wird das Zertifikat von einem Client unter Nutzung einer IP-Verbindung bei einem in ein IP-Netz und in eine Public-Key-Infrastruktur eingebundenen Server einer Zertifizierungsstelle abgefordert, von diesem Server automatisch generiert und an den Client übertragen. Das Verfahren geht davon aus, dass sich ein das Zertifikat mittels des Clients abfordernder Nutzer zum Aufbau einer Verbindung mit dem Server im Zuge einer Anmeldeprozedur gegenüber einem den Zugang zu dem IP-Netz ermöglichenden Zugangsserver identifiziert. Das Zertifikat wird unter Verwendung von in einer eindeutigen Zuordnung zu diesem Nutzer stehenden und als vertrauenswürdig einzustufenden Identitätsmerkmalen generiert, bei denen es sich um Angaben zum Nutzer handelt, welche zur elektronischen Abbildung eines zwischen ihm und dem Betreiber des Zugangsservers bestehenden Vertragsverhältnisses in einer Datenbank des Zugangsservers gehalten werden, auf welche der das Zertifikat generierende Server Zugriff hat. Erfindungsgemäß greift dabei der Server auf die in der Datenbank des Zugangsservers gespeicherten Identitätsmerkmale des Nutzers über eine temporäre IP-Adresse zu, welche dem ihn kontaktierenden Client des Nutzers im Zuge der Anmeldung beim Zugangsserver in bekannter Weise im Wege einer Remote Authentication Dial-In User Service-Abfrage (RADIUS-Abfrage) zugewiesen wurde.

Gemäß der Erfindung erfolgt der Zugriff auf die Identitätsmerkmale, indem der das Zertifikat generierende Server die temporäre IP-Adresse durch eine inverse RADIUS-Abfrage und eine sich anschließende Datenbankabfrage zu den authentischen Daten des Nutzers hin auflöst. Unter Verwendung entsprechender, durch die inverse RADIUS-Abfrage im Zugriff des Servers befindlicher und, aufgrund des bestehenden Vertragsverhältnisses, in vermeintlich eindeutiger Zuordnung zu dem Nutzer stehender, das heißt insoweit als authentisch einzustufender Identitätsmerkmale des Nutzers generiert der Server schließlich das von dem Nutzer angeforderte authentische elektronische Zertifikat.

In diesem Zusammenhang soll die Formulierung einer vermeintlich eindeutigen Zuordnung lediglich zum Ausdruck bringen, dass natürlich auch an dieser Stelle Manipulationen nicht auszuschließen sind, und zwar dann, wenn beispielsweise der eigentliche Nutzer des Clients seine Zugangsdaten für das Internet einem anderen Nutzer bekannt gibt bzw. überlässt oder wenn sie widerrechtlich durch einen Dritten in Erfahrung gebracht und genutzt werden. Grundsätzlich ist jedoch davon auszugehen, dass auf Grund der Anmeldeprozedur zum Herstellen der Verbindung zwischen dem Client und dem Server vom Nutzer des Clients Angaben abgefordert bzw. Handlungsweisen verlangt werden, in deren Ergebnis die Eindeutigkeit der Zuordnung für den angestrebten Zweck unterstellt werden kann. Der Kemgedanke der Erfindung liegt also darin, den eingangs erwähnten aufwendigen out-of-band-Mechanismus zur Überprüfung der Identität des das Zertifikat anfordernden Nutzers durch den elektronischen Rückgriff auf ein bereits bestehendes Vertragsverhältnis zu ersetzen, in dessen Rahmen als authentisch anzusehende Identitätsangaben des Nutzers als elektronische Abbildung des Vertragsverhältnisses durch den Betreiber eines Zugangsservers zu dem IP-Netz abgespeichert wurden und auf diese Angaben, ausgehend von der bei der Anmeldung beim Zugangsserver vergebenen temporären IP-Adresse, über eine inverse RADIUS-Abfrage zuzugreifen.. Dem liegt die Überlegung zugrunde, dass personengebundene Daten heute sowieso bereits in vielfältigster und weiterverarbeitbarer Form elektronisch gespeichert werden, wobei dieser Speicherung in vielen Fällen eine Überprüfung auf Authentizität vorangeht. Warum sollte man sich also dieser Tatsache nicht bedienen? Selbstverständlich müssen technische und gegebenenfalls auch organisatorische Voraussetzungen für den Zugriff auf diese Daten geschaffen werden.

Der Zugriff auf die Datenbank des Zugangsservers ist möglich, wenn entweder dessen Betreiber (im Hinblick auf das Internet wird dieser im Weiteren auch als ISP- Internet Service Provider bezeichnet) selbst auch als Zertifizierungsstelle auftritt und er demzufolge auch den Server zur Generierung der Zertifikate betreibt und somit unmittelbaren Zugriff auf die Vertragsdaten hat oder, wenn der Betreiber dem Server einer als allgemein vertrauenswürdig anerkannten Zertifizierungsstelle diesen Zugriff einräumt.

Entsprechend einer möglichen Variante des Verfahrens erfolgt die Anmeldeprozedur, also die Einwahl in das IP-Netz beziehungsweise der Zugang zu diesem über den Zugangsserver, unter Nutzung der Password Authentication Protocol Methode (PAP), so dass der Server unter Anwendung der inversen RADIUS-Abfrage aus der temporären IP-Adresse zuerst auf den Username und gegebenenfalls auf das Password des das Zertifikat anfordernden Nutzers schlussfolgert und mittels der sich daran anschließenden Datenbankabfrage die (authentischen) Identitätsmerkmale des Nutzers erhält. Da der Username zumindest im Verhältnis zu dem Betreiber des Zugangsservers in der Regel eindeutig ist, genügt für den Zugriff auf die Datenbank im Grunde der Username. Insoweit bezieht sich die Formulierung "gegebenenfalls Password" auch in den Ansprüchen auf möglicherweise in der Praxis anzutreffende andere Gegebenheiten, bei denen die Eindeutigkeit der Zuordnung erst durch die Kombination Username / Password gegeben sein könnte. Unter Verwendung dieser Identitätsmerkmale generiert der Server das Zertifikat, wobei dies in einer Abfolge mehrerer Verfahrensschritte und in einem Dialog mit dem Client im Wesentlichen wie folgt geschieht: Der Server generiert zunächst einen partiellen Zertifikats-Request (in der Regel eine HTML-Seite, welche die die Identitätsmerkmale repräsentierenden Daten enthält und zur Generierung des endgültigen Requests herangezogen wird), den er an den Nutzer sendet. Dieser muss nun noch sein Schlüsselpaar generieren (i.d.R. durch den Browser nach Drücken eines Buttons auf der HTML-Seite), den Identitätsmerkmalen den öffentlichen Schlüssel hinzufügen und das Ganze mit Hilfe des privaten Schlüssels signieren. (Das Format eines solchen Requests wird z.B. im Standard PKCS#10 genauer spezifiziert: http://www.rsasecurity.com/rsalabs/pkcs/pkcs-10/index.html.) Dieser signierte Datensatz wird an den Server zurückgesendet, der daraus schließlich das eigentliche Zertifikat (z.B. nach dem X.509-Standard) generiert. Zum Gewinnen zusätzlicher Sicherheit kann es bei dieser Verfahrensweise vorgesehen werden, daß der Server vom Nutzer nochmals das Password abfragt, z.B. vor Generierung des Zertifikatsrequests oder aber zumindest vor der Übermittlung des Zertifikats an den Client.

Das erfindungsgemäße Verfahren ist jedoch auch unter Verwendung anderer Authentisierungsvarianten bzw. anderer Anmeldeprozeduren möglich. Bei der Durchführung im IP-Netz ist hierbei vorzugsweise auch an die Verwendung des Challenge and Response Authentication Protocol (CHAP) zu denken. Hierbei wird ein ein Zertifikat abfordernder Nutzer bei der Anmeldung mit seinem Usernamen von dem Server eines Internetserviceproviders, also von dem Einwahl- beziehungsweise Zugangsserver, welcher nicht unbedingt mit dem zur Erstellung des Zertifikat dienenden Servers identisch ist, aufgefordert, eine zufällige Zahl (Challange) mit einem geheimen ihm zugewiesenen und dem Betreiber des Zugangsservers bekannten Schlüssel zu verschlüsseln und die Antwort an den Zugangsserver zurückzusenden. Der Einwahl- oder Zugangsserver verschlüsselt seinerseits die gleiche Zahl mit dem geheimen Schlüssel. Entspricht das dabei erhaltene Ergebnis der Antwort des Nutzers des Clients, war die Anmeldung erfolgreich. Im Ergebnis dieser RADIUS-Abfrage wird dann dem Nutzer des Clients die temporäre Internetadresse zugeteilt. Erst wenn dem Nutzer die temporäre Internetadresse zugewiesen wurde, kann er sich im IP-Netz bewegen und eine Verbindung zu dem die Zertifikate bereitstellenden Server aufbauen.

In umgekehrter Weise, in welcher dem Nutzer bzw. dem Client bei der RADIUS-Abfrage die temporäre IP-Adresse zugeteilt wurde, kann der das Zertifikat generierende Server bei einer Zertifikatsanforderung aus der dabei für die Verbindung zu ihm verwendeten temporären IP-Adresse den Usernamen des Nutzers gewinnen und mit diesem mittels einer Datenbankabfrage auf die Identitätsmerkmale des Nutzers zugreifen. Auch bei der Anmeldung unter Nutzung von CHAP kann eine RADIUS-CHAP-Abfrage zur nochmaligen Authentifizierung des Nutzer erfolgen, bevor das bereits generierte Zertifikat vom Server an den Client übermittelt wird.

Je nach der Struktur im Hinblick auf die Organisation der Zertifizierungsstelle bzw. des den Zugang zum Internet ermöglichenden ISP (Internet-Service-Provider), aber unabhängig von der verwendeten Anmeldeprozedur (PAP oder CHAP), kann es sich bei dem Server, welcher die Zertifikate generiert, um denselben Server handeln, welcher auch den Zugang zum Internet ermöglicht. In jedem Falle handelt es sich aber um einen Server, der auf die Identitätsmerkmale des Nutzers, welche im Rahmen der elektronischen Abbildung seines Vertragsverhältnisses mit dem ISP in einer Datenbank abgespeichert wurden, Zugang hat.

Entsprechend einer vorteilhaften Weiterbildung des Verfahrens ist es vorgesehen, dass die Generierung eines Zertifikats durch einen hierfür bestimmten Server erst dann erfolgt, wenn das elektronisch abgebildete Vertragsverhältnis und die zu diesem Zweck abgespeicherten Identitätsmerkmale bereits über einen vorbestimmbaren Zeitraum in der Datenbank abgelegt sind. Im Beispiel des Vertragsverhältnisses mit einem ISP könnte es also denkbar sein, den Daten ein Kennzeichen zuzuordnen, durch welches sie erst nach ein oder zwei Abrechnungsperioden, in denen der ISP die anfallenden Internetgebühren beim Nutzer abgerechnet und dabei über die Authentizität des Nutzers auf Grund einer erfolgten Zahlung höhere Sicherheit gewonnen hat, zur Erstellung eines Zertifikats zugelassen werden. In Fällen, bei denen das Datum des Vertragsabschlusses sowieso erfasst und in der Datenbank gespeichert wird, bedarf es nicht einmal eines solchen zusätzlichen Merkmals. Vielmehr muss der mit der Erzeugung des Zertifikats beauftragte Server nach dem Eingang der aus der Datenbank abgeforderten Nutzerangaben nur dieses Datum überprüfen und entsprechend des Ergebnisses eines Vergleichs mit einer voreingestellten zeitlichen Bedingung das Zertifikat generieren oder dessen Generierung verweigern. Für den Fachmann ist klar, dass ein solches zusätzliches, praktisch einer Plausibilitätsabfrage entsprechendes Kriterium ohne weiteres unter Nutzung der (des) von den Servern geführten internen Systemzeit (-datums) ausgewertet werden kann.

Die Erfindung soll nachfolgend nochmals an einem Beispiel verdeutlicht werden.

Ein Internetnutzer hat ein bestehendes Vertragsverhältnis mit einem ISP. In einer Datenbank auf einem Server des ISP sind bestimmte im Zusammenhang mit dem Abschluss des Vertrages bei dem Nutzer erhobene Identitätsmerkmale abgespeichert. Diese werden durch die Anmeldung des Nutzers bei Zugangsserver nach dem erfolgreichen Durchlaufen einer Anmeldeprozedur zugänglich. Der Nutzer wird beispielsweise bei der Anmeldung, sofern diese nach der PAP-Methode erfolgt, nach seinem Nutzernamen und dem Password gefragt. Im Zuge der RADIUS-Abfrage wird schließlich dem Client des Nutzers eine temporäre Internetadresse zugeordnet. Der Nutzer baut nun von seinem Client aus eine Internet-Verbindung zu einem Server einer Zertifizierungsstelle auf und fordert dort ein elektronisches Zertifikat ab. Auf Grund dessen, dass dieser Server ebenfalls durch den ISP oder aber in seinem Auftrage betrieben wird, hat der Server Zugriff auf die RADIUS-Nutzerdaten und die Kundendatenbank des ISP. Ein solcher RADIUS-Nutzereintrag sieht beispielsweise wie folgt aus:
- user_x: Password = "abcde", Caller-Id = "00892225558"
Ascend-Send-Auth = Send-Auth-PAP,
Framed-Protocol = PPP,
User-Service = Framed-User,
Framed-Address = 141.45.240.1.,
Framed-Netmask = 255.255.255.255,
Ascend-Metric = 2,
Framed-Routing = None,
Ascend-Idle-Limit = 720,
Ascend-Dial-Number = 00892225558

Im Sinne einer inversen RADIUS-Abfrage löst der das Zertifikat generierende Server die temporäre Internetadresse (141.45.240.1.) zunächst zu Username (user_x) und gegebenenfalls zu Password (vorliegend "abcde") des Nutzers auf. Mit diesen Angaben kann er nun über eine Datenbankabfrage bei der Datenbank, in welcher der ISP seine Kundendaten als elektronische Abbildung der mit den Kunden geschlossenen Verträge hinterlegt hat, als Identitätsmerkmale des das Zertifikat anfordernden Nutzers abrufen. In Bezug auf die an den entsprechenden ISP vertraglich gebundenen Nutzer ist dabei durch den Usernamen bzw. die Kombination Username/Password eine eindeutige Zuordnung zu bestimmten Kundendaten (Merkmalen) gegeben. Diese Merkmale, welche auf Grund des möglicherweise bereits länger bestehenden Vertragsverhältnisses zwischen dem Nutzer und dem ISP als authentisch einzustufen sind, nimmt der zur Bereitstellung des Zertifikats aufgeforderte Server zur Grundlage für die Generierung desselben. Mittels einer Einweg-Hash-Funktion erzeugt er das entsprechende Zertifikat. Nach der Generierung des Zertifikats oder parallel dazu wird der Nutzer über seinen Client durch den mit ihm in Verbindung stehenden Server nochmals zur Eingabe von User-Name und Password aufgefordert. Werden diese Angaben korrekt an den Server übermittelt, dann überträgt dieser das den Nutzer eindeutig authentisierende elektronische Zertifikat an dessen Client. Der Nutzer verfügt nun über ein Zertifikat, das er einerseits zur authentischen Übermittlung seines öffentlichen Schlüssels an Dritte, und andererseits zum Nachweis der Authentizität einer von ihm mit seinem privaten Schlüssel generierten Signatur verwenden kann. Durch das Vertrauen, welches die Nutzer in die Zertifizierungsbehörde haben, die den die Zertifikate generierenden Server unterhält, ergibt sich gleichzeitig das Vertrauen in die Authentizität des jeweils verwendeten Zertifikats.

## Patentansprüche

1. Verfahren zur Bereitstellung eines authentischen elektronischen Zertifikats, bei dem ein solches Zertifikat von einem Client unter Nutzung einer IP-Verbindung zu einem in ein IP-Netz und in eine Public Key-Infrastruktur einer Zertifizierungsstelle eingebundenen Server abgefordert und von diesem Server an den Client ein automatisch generiertes Zertifikat übertragen wird, wobei sich ein das Zertifikat mittels des Clients abfordernder Nutzer zum Aufbau einer Verbindung zu dem das Zertifikat generierenden Server im Zuge einer Anmeldeprozedur gegenüber einem den Zugang zu dem IP-Netz ermöglichenden Zugangsserver identifiziert und das Zertifikat unter Verwendung von in einer eindeutigen Zuordnung zu dem Nutzer stehenden und als vertrauenswürdig einzustufenden Identitätsmerkmalen generiert wird, welche zur elektronischen Abbildung eines mit dem Nutzer bestehenden Vertragsverhältnisses in einer Datenbank des Zugangsservers gehalten werden, **dadurch gekennzeichnet, dass** der Server zur Generierung des Zertifikats auf die in der Datenbank des Zugangsservers gespeicherten Identitätsmerkmale des Nutzers über eine, dem ihn kontaktierenden Client im Zuge der Anmeldung beim Zugangsserver unter Nutzung einer Remote Authentication Dial-In User Service-Abfrage zugewiesene temporäre IP-Adresse zugreift, indem er diese IP-Adresse durch eine inverse RADIUS-Abfrage und eine sich anschließende Datenbankabfrage zu den authentischen Daten des Nutzers hin auflöst.

2. Verfahren nach Anspruch 1, **dadurch gekennzeichnet, dass** die Anmeldung des den Client bedienenden Nutzers bei dem Zugangsserver unter Verwendung der PAP-Methode, das heißt, der Password Authentication Protocol-Methode, erfolgt und der das Zertifikat generierende Server, die dem Nutzer beziehungsweise dem Client nach der Anmeldung zugeteilte temporäre IP-Adresse im Zuge der inversen RADIUS-Abfrage zunächst zu Username und gegebenenfalls Password auflöst und unter Nutzung dieser Angaben Zugriff auf die in der Datenbank hinterlegten Identitätsmerkmale des Nutzers erhält.

3. Verfahren nach Anspruch 2, **dadurch gekennzeichnet, dass** der das Zertifikat generierende Server im Zuge der Generierung, jedoch zumindest vor der Übertragung des Zertifikats an den Client, nochmals das zur Anmeldung bei dem Zugangsserver genutzte und mit dem elektronisch abgebildeten Vertragsverhältnis und dem Usernamen korrespondierende Password beim Nutzer abfordert.

4. Verfahren nach Anspruch 1, **dadurch gekennzeichnet, dass** die Anmeldung des den Client bedienenden Nutzers bei dem Zugangsserver unter Verwendung der CHAP-Methode, das heißt, der Challenge and Response Authentication Protocol-Methode, erfolgt und der das Zertifikat generierende Server, die dem Nutzer beziehungsweise dem Client nach der Anmeldung zugeteilte temporäre IP-Adresse durch eine inverse RADIUS-Abfrage unter Nutzung der CHAP-Methode und eine sich anschließende Datenbankabfrage hin zu den durch die elektronische Abbildung des Vertragsverhältnisses zu einem Internetserviceprovider (ISP) gespeicherten Identitätsmerkmalen des Nutzers auflöst.

5. Verfahren nach Anspruch 4, **dadurch gekennzeichnet, dass** der das Zertifikat generierende Server den Nutzer im Zuge der Generierung, jedoch zumindest vor der Übertragung des Zertifikats, nochmals mit einer CHAP-Abfrage überprüft.

6. Verfahren nach einem der Ansprüche 1 bis 5, **dadurch gekennzeichnet, dass** die Generierung des Zertifikats erst nach einer bestimmten Zeit des Bestehens des Vertragsverhältnisses zugelassen wird.

## Claims

1. Method for providing an authentic electronic certificate, as part of which method such a certificate is requested by a client using an IP connection to a server, said server being incorporated in an IP network and also in a public key infrastructure of a certificate authority, and as part of which method an automatically generated certificate is transmitted from said server to the client, wherein a user requesting the certificate through the client identifies himself to an access server permitting access to the IP network during the course of a sign-on procedure in order to establish a connection to the server generating the certificate, and wherein the certificate is generated using identifying characteristics uniquely associated with the user and considered trustworthy, said identifying characteristics being held in a database of the access server for electronic representation of a contractual relationship existing with the user, **characterized in that** the server, in order to generate the certificate, accesses the user's identifying characteristics stored in the database of the access server, accomplishing said access with a temporary IP address assigned to the client contacting said server, said address having been assigned by means of a Remote Authentication Dial-In User Service query during the course of the client's sign-on to the remote access server, said server resolving said IP address into the authentic data of the user by means of an inverse RADIUS query and a subsequent database query.

2. Method according to claim 1, **characterized in that** sign-on to the access server by the user operating the client takes place using the PAP method, which is to say the Password Authentication Protocol method, and as part of the inverse RADIUS query the server generating the certificate first resolves the temporary IP address, said address having been assigned to the user or client after sign-on, into user name and if applicable password and, using this information, obtains access to the identifying characteristics of the user stored in the database.

3. Method according to claim 2, **characterized in that**, during the course of the generation but at least prior to transmission of the certificate to the client, the server generating the certificate once again requests from the user the password that was used during sign-on to the access server and that corresponds to the electronically represented contractual relationship and to the user name.

4. Method according to claim 1, **characterized in that** sign-on to the access server by the user operating the client takes place using the CHAP method, which is to say the Challenge and Response Authentication Protocol method, and the server generating the certificate uses a reverse RADIUS query employing the CHAP method, and a subsequent database query, to resolve the temporary IP address assigned to the user or client after sign-on, into the identifying characteristics of the user stored by the electronic representation of the contractual relationship to an Internet service provider (ISP).

5. Method according to claim 4, **characterized in that** the server generating the certificate again verifies the user with a CHAP query during the course of the generation, but at least prior to transmission of the certificate to the client.

6. Method according to any one of claims 1 through 5, **characterized in that** the generation of the certificate is not permitted until the contractual relationship has existed for a certain period of time.

## Revendications

1. Procédé de création d'un certificat électronique authentique dans lequel un client effectue une demande d'un tel certificat au moyen d'une liaison IP vers un serveur intégré à un réseau IP et à une infrastructure à clé publique d'une autorité de certification et dans lequel ce serveur transmet au client un certificat généré automatiquement, et dans lequel un utilisateur qui effectue une demande de certificat moyennant le client, s'identifie au cours d'une procédure d'enregistrement auprès d'un serveur d'accès permettant l'accès au réseau IP, pour établir une liaison vers le serveur générant le certificat, et dans lequel le certificat est généré au moyen de caractéristiques d'identité affectées à l'utilisateur de manière non équivoque et considérées comme fiables, détenues dans une base de données du serveur d'accès pour la représentation électronique d'une relation contractuelle existante avec l'utilisateur,
**caractérisé en ce que**, pour générer le certificat, le serveur accède, par l'intermédiaire d'une adresse IP temporaire affectée au client qui le contacte, au cours de la procédure d'enregistrement auprès du serveur d'accès et au moyen d'une requête Remote Authentication Dial-In User Service aux caractéristiques d'identité de l'utilisateur stockées dans la base de données du serveur d'accès, en résolvant cette adresse IP en données authentiques de l'utilisateur par une requête RADIUS inverse suivie d'une interrogation de la base de données.

2. Procédé selon la revendication 1,
**caractérisée en ce que** l'enregistrement de l'utilisateur utilisant le client auprès du serveur d'accès s'effectue au moyen de la méthode PAP, à savoir la méthode Password Authentication Protocol, et **en ce que** le serveur générant le certificat résout d'abord, au cours de la requête RADIUS, l'adresse IP temporaire affectée à l'utilisateur ou au client après l'enregistrement, en nom d'utilisateur et, le cas échéant, en mot de passe, et puis obtient, à l'aide de ces données, accès aux caractéristiques d'identité de l'utilisateur stockées dans la base de données.

3. Procédé selon la revendication 2,
**caractérisé en ce que** le serveur générant le certificat redemande à l'utilisateur, au cours de la génération ou, en tout cas, au moins avant la transmission du certificat au client, le mot de passe utilisé pour l'enregistrement auprès du serveur d'accès et correspondant à la relation contractuelle représentée électroniquement et au nom d'utilisateur.

4. Procédé selon la revendication 1,
**caractérisé en ce que** l'enregistrement de l'utilisateur utilisant le client auprès du serveur d'accès s'effectue au moyen de la méthode CHAP, à savoir la méthode Challenge and Response Authentication Protocol, et **en ce que** le serveur générant le certificat résout en caractéristiques d'identité de l'utilisateur stockées par la représentation électronique de la relation contractuelle avec un fournisseur de services internet (ISP), l'adresse IP temporaire, affectée à l'utilisateur ou au client après l'enregistrement, par une requête RADIUS inverse au moyen de la méthode CHAP suivie d'une interrogation de la base de données.

5. Procédé selon la revendication 4,
**caractérisé en ce que** le serveur générant le certificat vérifie l'identité de l'utilisateur une nouvelle fois au moyen d'une requête CHAP au cours de la génération ou, en tout cas, au moins avant la transmission du certificat.

6. Procédé selon l'une des revendications 1 à 5,
**caractérisé en ce que** la génération du certificat n'est autorisée qu'après une durée d'existence donnée de la relation contractuelle.
